Europäisches Patentamt

European Patent Office

Office européen des brevets

(11) Publication number: **0 449 434 A2**

# EUROPEAN PATENT APPLICATION

(21) Application number: 91301796.8

(51) Int. Cl.5: **G01N 21/03**, G01N 35/00

(22) Date of filing: 05.03.91

(30) Priority: 30.03.90 US 502398

(43) Date of publication of application:
**02.10.91 Bulletin 91/40**

(84) Designated Contracting States:
**DE GB**

(71) Applicant: BECKMAN INSTRUMENTS, INC.
**2500 Harbor Boulevard Box 3100**
**Fullerton California 92634-3100(US)**

(72) Inventor: **Glenn, Thomas J.**
**13732 Solitaire Way**
**Irvine, California 92720(US)**
Inventor: **Quint, Joseph F.**
**2900 Maple Tree Drive**
**Orange, California 92667(US)**

(74) Representative: **Ede, Eric et al**
**Fitzpatricks 4 West Regent Street**
**Glasgow G2 1RS(GB)**

(54) **Multi-cell module for spectrophotometry.**

(57) A multi-cell module for holding samples for spectrophotometry. The cell-to-cell spacing substantially matches the well-to-well spacing of a standard 96-well microtiter plate. The number of cells in each module and the physical dimensions of the cells are chosen such that multiple modules can be arranged to form a larger sample holder having cells matching 96-well microtiter plate well-to-well spacing. This allows the use of instruments and tools designed for use with 96-well microtiter plates for performing operations on the modules.

FIG. 1

EP 0 449 434 A2

## 1. Field of the Invention

This invention relates to the field of radiant energy analysis and more particularly to a sample cell for use in radiant energy analyzers.

## 2. Description of Related Art

In the field of spectral analysis various differing requirements are placed upon a sample cell depending upon the particular analysis being performed. A variety of different kinds and sizes of cells are used, for example, circular cells, square cells, micro cells and flow cells. In the typical spectral analysis it is common practice to pass radiant energy through the sample and determine the amount of energy absorbed by the sample at a given wavelength. The radiation may be scanned over a wide range of wavelength.

In a Beckman DU®-8 spectrophotometer, the sample cell is a cuvette designed for containing one sample. The sample cell is supported in a chamber within a sample cell holder and positioned across the radiant energy path in the instrument. Windows are provided on the walls of the cell holder to allow the radiant energy to pass through to the sample. For spectral analysis of multiple samples, the cell holder used has several chambers separated by walls, each chamber for receiving one cuvette. The multi-chamber holder is translated across the radiant energy path for spectral analysis of the samples in succession. In the past, some sample cells have been partitioned to hold two samples. However, these are seldom used.

One of the problems experienced by researchers in the field is that it is difficult and tedious to fill a large number of cells individually with sample solutions. Automated liquid transfer instruments cannot be utilized to their advantage because of the unitary single or dual cell structures.

## SUMMARY OF THE INVENTION

The present invention is directed to a sample cell module wherein the cell-to-cell spacing corresponds to the well-to well spacing in standard 96-well microtiter plates and tip-to-tip spacing of standard multiple tip pipettes designed for use with the 96-well microtiter plates. Two or more similar modules can be combined to form an overall multi-cell sample holder for holding multiple samples for spectrophotometry. The modules can be conveniently filled with samples using standard multi-tip ganged pipettes. In one aspect of the invention, the module has twelve cells linearly arranged in a block for handling twelve samples. In another aspect of the invention, the module is shorter having four cells. Two or more modules can be arranged to handle samples in multiples of four.

## BRIEF DESCRIPTION OF THE DRAWINGS

Fig. 1 is a perspective view of a cell module according to one embodiment of the present invention.

Fig. 2 is a top view of the cell module of Fig. 1.

Fig. 3 is a sectional view along line 3-3 of Fig. 2.

Fig. 4 is a perspective view of a cell module according to another embodiment of the present invention.

Fig. 5 is a top view of the cell module of Fig. 4.

Fig. 6 is a sectional view along line 6-6 of Fig. 5.

## DESCRIPTION OF THE ILLUSTRATED EMBODIMENT

The following description is of the best presently contemplated mode of carrying out the invention. This description is made for the purpose of illustrating the general principles of the invention and should not be taken in a limiting sense. The scope of the invention is best determined by reference to the appended claims.

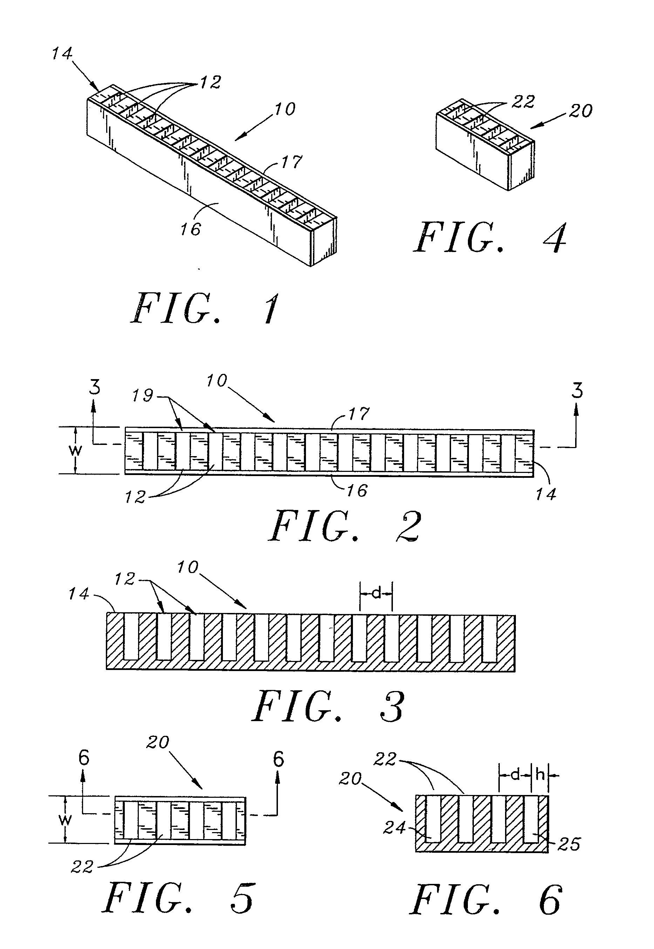

Figs. 1-3 show a sample cell module 10 according to one embodiment of the present invention. The cell module 10 comprises a body in which twelve cells 12 each in the shape of a rectangular parallelepiped are defined. The cells are arranged linearly along the longitudinal direction of the body. Specifically, the body is made up of a core 14 of a comb-tooth configuration to which side panels 16 and 17 are bonded to the longitudinal sides by fusion. The core 14 and the side panels 16 and 17 together define the cells 12. The cell-to-cell spacing d is sized to substantially equal to the well-to-well spacing in a commercially available 96-well microtiter plate that has become an industry standard. Specifically, in a standard 96-well microtiter plate, the well-to-well spacing is substantially 0.356" or 9 mm. Thus, the cell can be individually filled with sample using a single tip pipette or in a less tedious manner simultaneously filled using a 12-tip ganged pipette that is commercially available and which has become an industry standard. The latter allows the starting of kinetic reactions simultaneously in the multiple cell for monitoring the rate of reaction.

It is envisioned that several of the same sample cell modules 10 can be arranged side by side to form a tray of sample cells. For example, using eight modules 10 each of twelve cells and width w equal to the well-to-well spacing d in a 96-well microtiter plate, a 8 x 12 cell configuration resembling a 96-well microtiter plate configuration can be formed which is compatible with the 96-well microtiter plate. Hence, the conventional means for filling the wells of a 96-well microtiter plate with sample can be used advantageously with the cell modules of the present invention. For example, a liquid handling apparatus such as the BIOMEK® 1000 automated laboratory workstation designed by Beckman Instruments, Inc. can be used to distribute sample solutions to the cells arranged in a 8 x 12 configuration with minimal or no modification to the instrument hardware or software. The filled "tray" of sample modules can subsequently be processed by other instruments and tools designed for use with a 96-well microtiter plate.

For purposes of spectrophotometry, the side panels 16 and 17 of the sample cell module 10 should be parallel within one micron tolerance in order to minimize distortion of the radiant energy through the sample cell. The side panels 16 and 17 should be clear and polished to define windows 19 for transmitting radiation through the cells 12. The core body 14 should be given a black finish for the purpose of absorbing stray radiant energy. The entire cell can be made of glass or quartz such as suprasil which is transparent to ultraviolet radiation.

In another embodiment of the present invention as shown in Figs. 4-6, the number of cells 22 in the module 20 is reduced to four. The spacing h from the center of the cells 24 and 25 on the ends of the module to the respective ends is exactly half the cell-to-cell spacing d so that two or more cell modules 20 can be placed in an end-to-end configuration to build up a longer module of uniform cell spacing. In otherwords, the end walls are half the thickness of the dividing walls between cells. In all other respects, the four cell module 20 is similar to the 12-cell module 10 in construction.

The four cell module has particular advantages over the 12-cell module. A 96-well microtiter plate has wells arranged in an 8 x 12 configuration. The 4-cell modules can be arranged in either direction to form the 8 x 12 configuration while maintaining proper cell-to-cell spacing. Incidentally, it is recognized that for statistical reasons, the number of cells for a spectral analysis of a particular sample is preferably four. In a typical analysis, one cell is used for a reference material and the remaining three cells used for holding the same sample. By providing three cells for the same sample, it has been found that the result of the analysis has been more reliable from a statistical perspective. Further, the physical structures of the four cells in the same module are substantially uniform. Therefore the cells have substantially the same absorbance characteristics which affects the spectral analysis of the samples in the three cells and the reference material in the same way.

It has always been found that the process of transferring sample solution to fill a large number of sample cells individually is particularly tedious. By providing small modules of four cells each, commercially available ganged pipettes of eight or twelve tips can be used to fill a combination of two or three modules, respectively, at the same time. Thus, the present invention provides a sample cell module which is compatible with existing liquid transfer instruments in the field. The present invention also allows the starting of kinetic reactions simultaneously in the multiple cells for monitoring the rate of reaction.

Because of the high dimensional tolerance required for the sample cell module, it is more cost efficient to use, for example, two four-cell modules as opposed to one eight-cell module. The high dimensional tolerance is harder to accomplish for a larger structure and thus more expensive to manufacture. Also, in the event of damage to one cell, the replacement of an entire sample cell module will of course be lower for a four-cell module than for a eight or 12-cell module.

To use the sample cell module in a spectrophotometer, it is held in a cell holder (not shown). The cell holder has one chamber shaped and sized to receive one or more sample cell modules in an end-to-end manner. If some of the space in the holder is not occupied by modules, one or more dummy blocks having external dimensions equal to that of the four-cell module can be used to fill the additional space in the cell holder.

While the invention has been described with respect to the embodiments in accordance therewith, it will be apparent to those skilled in the art that various modifications and improvements may be made without departing from the scope and spirit of the invention. It is within the scope of the present invention to use a multiple chamber cell holder to hold a number of individual single-cell cuvettes to form a module having cell-to-cell spacing matching the well-to-well spacing of a 96-well microtiter plate. Accordingly, it is to be understood that the invention is not to be limited by the specific illustrated embodiments, but only by the scope of the appended claims.

## Claims

1. A sample cell module for a spectrophotometer comprising:

a body in which a plurality of cells are defined in a linear configuration for receiving samples, each cell bordered by windows on two opposite sides which are transparent to radiation, the cell-to-cell spacing is substantially the same as the well-to-well spacing in a 96-well microtiter plate.

2. A sample cell module as in claim 1 wherein the cells are in the shape of rectangular parallelepipeds.

3. A sample cell module as in claim 2 wherein the number of cells is twelve.

4. A sample cell module as in claim 2 wherein the number of cells is multiples of four.

5. A sample cell module as in claim 4 wherein the body has dividing walls between cells and end walls for the cells at the opposite ends of the body, the thickness of the end walls being half of the thickness of the dividing walls, whereby two or more of the modules may be arranged in an end to end manner while keeping the same uniform spacing between adjacent cells for the cells located at the adjoining ends of adjacent modules.

6. A sample cell module as in claim 5 wherein the body is given a black finish except for the windows.

7. A sample cell module as in claim 1 wherein the width of the body is equal to the cell-to-cell spacing such that two or more modules can be arranged in a side by side manner to form a portion of a 96-well microtiter plate configuration.

8. A system of sample cells for use in spectrophotometry comprising:
   a plurality of sample cell modules wherein each module comprises:
   a body in which a plurality of cells are defined in a linear configuration for receiving samples, each cell bordered by windows on two opposite sides which are transparent to radiation, the cell-to-cell spacing is substantially the same as the well-to-well spacing in a 96-well microtiter plate.

9. A system as in claim 8 wherein the cells are in the shape of rectangular parallelepipeds.

10. A system as in claim 9 wherein the number of cells in some of the modules is twelve.

11. A system as in claim 9 wherein the number of cells in some of the modules is multiples of four.

12. A system as in claim 11 wherein the body has dividing walls between cells and end walls for the cells at the opposite ends of the body, the thickness of the end walls being half of the thickness of the dividing walls, whereby two or more of the modules may be arranged in an end to end manner while keeping the same uniform spacing between adjacent cells for the cells located at the adjoining ends of adjacent modules.

13. A system as in claim 12 wherein the body is given a black finish except for the windows.

14. A system as in claim 8 wherein the width of the body is equal to the spacing between cells such that two or more modules can be arranged in a side by side manner to form a portion of a 96-well microtiter plate configuration.

FIG. 1

FIG. 4

FIG. 2

FIG. 3

FIG. 5

FIG. 6